(19) Europäisches Patentamt
European Patent Office
Office européen des brevets

(11) **EP 4 489 339 A1**

(12) **EUROPEAN PATENT APPLICATION**

(43) Date of publication:
**08.01.2025 Bulletin 2025/02**

(21) Application number: **23183956.4**

(22) Date of filing: **06.07.2023**

(51) International Patent Classification (IPC):
*H04L 5/00* (2006.01)  *H04L 27/26* (2006.01)

(52) Cooperative Patent Classification (CPC):
**H04L 5/0044; H04L 27/2602; H04L 27/2605; H04L 27/2634;** H04L 5/0007; H04L 27/2618; H04L 27/264

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Nokia Technologies Oy**
**02610 Espoo (FI)**

(72) Inventors:
• **TERVO, Oskari**
**90630 Oulu (FI)**
• **LEHTI, Arto**
**92160 Antony (FR)**
• **SAAD, Majed**
**91300 Massy (FR)**

(74) Representative: **TBK**
**Bavariaring 4-6**
**80336 München (DE)**

(54) **EFFICIENT EXPLOITATION OF SPECTRUM EXTENSION RESOURCES**

(57) There are provided measures for efficient exploitation of spectrum extension resources. Such measures exemplarily comprise generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and transmitting said uplink signal, and in relation to said generating, such measures exemplarily comprise dividing a data stream to be transmitted into a first data sub-stream and a second data sub-stream, modulating symbols of said uplink signal based on said first data sub-stream, arranging said symbols in said in-band portion, copying said symbols arranged in at least one predetermined subportion of said in-band portion to said at least one excess-band portion, determining, based on said second data sub-stream, first state subcarriers of said total band allocation and second state subcarriers of said total band allocation, wherein a first subset of said second state subcarriers is located in said at least one excess-band portion, and modifying said symbols arranged on said second state subcarriers.

Perform deactivation of subcarriers in excess-band and its corresponding in-band part according to selected IM pattern

Fig. 10

# Description

Field

Various example embodiments relate to efficient exploitation of spectrum extension resources. More specifically, various example embodiments exemplarily relate to measures (including methods, apparatuses and computer program products) for realizing efficient exploitation of spectrum extension resources.

Background

The present specification generally relates to signals generated and transmitted over the air-interface, where the signals are transmitted utilizing an extension of a transmission spectrum.

In such case, there is a need to provide for efficient exploitation of spectrum extension resources.

Summary

Various example embodiments aim at addressing at least part of the above issues and/or problems and drawbacks.

Various aspects of example embodiments are set out in the appended claims.

According to an exemplary aspect, there is provided a method comprising generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and transmitting said uplink signal, wherein in relation to said generating, the method comprises dividing a data stream to be transmitted into a first data sub-stream and a second data sub-stream, modulating symbols of said uplink signal based on said first data sub-stream, arranging said symbols in said in-band portion, copying said symbols arranged in at least one predetermined sub-portion of said in-band portion to said at least one excess-band portion, determining, based on said second data sub-stream, first state subcarriers of said total band allocation and second state subcarriers of said total band allocation, wherein a first subset of said second state subcarriers is located in said at least one excess-band portion, and modifying said symbols arranged on said second state subcarriers.

According to an exemplary aspect, there is provided a method comprising receiving an uplink signal, wherein said uplink signal is a signal which is subjected to spectrum extension and which corresponds to a total band allocation including an in-band portion and at least one excess-band portion, wherein said at least one excess-band portion corresponds to said spectrum extension, distinguishing first state subcarriers of said total band allocation and second state subcarriers of said total band allocation, wherein a first subset of said second state subcarriers is located in said at least one excess-band portion, determining, based on a distribution of said second state subcarriers, a second data sub-stream of a data stream, de-modulating symbols arranged on said first state subcarriers as a first data sub-stream of said data stream, and combining said first data sub-stream and said second data sub-stream as said data stream.

According to an exemplary aspect, there is provided an apparatus comprising generating means configured to generate an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and transmitting means configured to transmit said uplink signal, said generating means including dividing means configured to divide a data stream to be transmitted into a first data sub-stream and a second data sub-stream, modulating means configured to modulate symbols of said uplink signal based on said first data sub-stream, arranging means configured to arrange said symbols in said in-band portion, and copying means configured to copy said symbols arranged in at least one predetermined sub-portion of said in-band portion to said at least one excess-band portion, determining means configured to determine, based on said second data sub-stream, first state subcarriers of said total band allocation and second state subcarriers of said total band allocation, wherein a first subset of said second state subcarriers is located in said at least one excess-band portion, and modifying means configured to modify said symbols arranged on said second state subcarriers.

According to an exemplary aspect, there is provided an apparatus comprising receiving means configured to receive an uplink signal, wherein said uplink signal is a signal which is subjected to spectrum extension and which corresponds to a total band allocation including an in-band portion and at least one excess-band portion, wherein said at least one excess-band portion corresponds to said spectrum extension, distinguishing means configured to distinguish first state subcarriers of said total band allocation and second state subcarriers of said total band allocation, wherein a first subset of said second state subcarriers is located in said at least one excess-band portion, determining means configured to determine, based on a distribution of said second state subcarriers, a second data sub-stream of a data stream, de-modulating means configured to de-modulate symbols arranged on said first state subcarriers as a first data sub-stream of said data stream, and combining means configured to combine said first data sub-stream and said second data sub-stream as said data stream.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and transmitting said uplink signal, wherein in relation to said generating, the at least one processor, with the at least one memory and the computer program code, being configured to cause the apparatus to perform dividing a data stream to be transmitted into a first data sub-stream and a second data sub-stream, modulating symbols of said uplink signal based on said first data sub-stream, arranging said symbols in said in-band portion, copying said symbols arranged in at least one predetermined sub-portion of said in-band portion to said at least one excess-band portion, determining, based on said second data sub-stream, first state subcarriers of said total band allocation and second state subcarriers of said total band allocation, wherein a first subset of said second state subcarriers is located in said at least one excess-band portion, and modifying said symbols arranged on said second state subcarriers.

According to an exemplary aspect, there is provided an apparatus comprising at least one processor, at least one memory including computer program code, and at least one interface configured for communication with at least another apparatus, the at least one processor, with the at least one memory and the computer program code, being configured to cause the apparatus to perform receiving an uplink signal, wherein said uplink signal is a signal which is subjected to spectrum extension and which corresponds to a total band allocation including an in-band portion and at least one excess-band portion, wherein said at least one excess-band portion corresponds to said spectrum extension, distinguishing first state subcarriers of said total band allocation and second state subcarriers of said total band allocation, wherein a first subset of said second state subcarriers is located in said at least one excess-band portion, determining, based on a distribution of said second state subcarriers, a second data sub-stream of a data stream, de-modulating symbols arranged on said first state subcarriers as a first data sub-stream of said data stream, and combining said first data sub-stream and said second data sub-stream as said data stream.

According to an exemplary aspect, there is provided a computer program product comprising computer-executable computer program code which, when the program is run on a computer (e.g. a computer of an apparatus according to any one of the aforementioned apparatus-related exemplary aspects of the present disclosure), is configured to cause the computer to carry out the method according to any one of the aforementioned method-related exemplary aspects of the present disclosure.

Such computer program product may comprise (or be embodied) a (tangible) computer-readable (storage) medium or the like on which the computer-executable computer program code is stored, and/or the program may be directly loadable into an internal memory of the computer or a processor thereof.

Any one of the above aspects enables an efficient exploitation of spectrum extension resources to thereby solve at least part of the problems and drawbacks identified in relation to the prior art. Such efficient exploitation may be achieved by increased spectral and/or energy efficiency and may lead to additional transmission capacity, reduced coding rate, and reduced inter-carrier interference.

By way of example embodiments, there is provided efficient exploitation of spectrum extension resources. More specifically, by way of example embodiments, there are provided measures and mechanisms for realizing efficient exploitation of spectrum extension resources.

Thus, improvement is achieved by methods, apparatuses and computer program products enabling/realizing efficient exploitation of spectrum extension resources.

Brief description of the drawings

In the following, the present disclosure will be described in greater detail by way of non-limiting examples with reference to the accompanying drawings, in which

Figure 1 is a block diagram illustrating an apparatus according to example embodiments,

Figure 2 is a block diagram illustrating an apparatus according to example embodiments,

Figure 3 is a block diagram illustrating an apparatus according to example embodiments,

Figure 4 is a block diagram illustrating an apparatus according to example embodiments,

Figure 5 is a schematic diagram of a procedure according to example embodiments,

Figure 6 is a schematic diagram of a procedure according to example embodiments,

Figure 7 is a block diagram alternatively illustrating apparatuses according to example embodiments,

Figure 8 is a schematic block diagram illustrating signal preparation elements,

Figure 9 is a schematic block diagram illustrating signal preparation elements according to example embodiments,

Figure 10 is a schematic block diagram illustrating signal preparation elements according to example embodiments,

Figure 11 shows a schematic diagram of example complementary cumulative distribution functions for cubic metric (as e.g. defined in 3GPP) under specific signal preparation scenarios according to example embodiments, and

Figure 12 shows a schematic diagram of example complementary cumulative distribution functions for cubic metric (as e.g. defined in 3GPP) under specific signal preparation scenarios according to example embodiments.

Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein. Example embodiments may be directed to 3rd Generation Partnership Project (3GPP) 6th Generation (6G), but are not limited thereto. As such, example embodiments may be implemented also in 3GPP Rel-19 and beyond, as well as any other communication or communication related systems.

Hereinafter, various embodiments and implementations of the present disclosure and its aspects or embodiments are described using several variants and/or alternatives. It is generally noted that, according to certain needs and constraints, all of the described variants and/or alternatives may be provided alone or in any conceivable combination (also including combinations of individual features of the various variants and/or alternatives).

As used herein, "at least one of the following:" and "at least one of" and similar wording, where the list of two or more elements are joined by "and" or "or", mean at least any one of the elements, or at least any two or more of the elements, or at least all the elements.

According to example embodiments, in general terms, there are provided measures and mechanisms for (enabling/realizing) efficient exploitation of spectrum extension resources.

In mobile radio applications, multiple techniques for carrying data via a radio interface are applied.

One aspect of these techniques is the generation of waveforms to be transmitted.

For example, in 3GPP 5th Generation (5G) New Radio (NR), modulated symbols and/or reference signals are converted to a waveform, which is a baseband signal, before it is mixed to radio frequency (RF) and transmitted over the air-interface.

One specified waveform in such scenario includes cyclic prefix orthogonal frequency division multiplexing (CP-OFDM), which is applicable to both uplink (UL) and downlink (DL).

Another specified waveform in such scenario includes Discrete Fourier Transform spread orthogonal frequency division multiplexing (DFT-s-OFDM), which is applicable to UL only.

DFT-s-OFDM (e.g. in 3GPP Rel-18) only supports a single transmission layer (rank = 1) per user, whereas CP-OFDM can support more than one layer (rank $\geq$1). This means that CP-OFDM can offer a higher throughput and capacity than DFT-s-OFDM.

In contrast, DFT-s-OFDM has a lower peak-to-average power ratio (PAPR) than CP-OFDM, which allows DFT-s-OFDM being used with a higher transmit power and thus offering better coverage.

DFT-s-OFDM is generally generated by adding a transform precoding block before the processing blocks used for generating CP-OFDM. In fact, the transform precoding block is a Discrete Fourier Transform (DFT) block that converts a time domain signal into frequency domain signal.

Although DFT-s-OFDM already offers a lower PAPR compared to CP-OFDM, a frequency domain spectrum shaping (FDSS) function is considered, which may be used to further reduce the PAPR and/or to lower cubic metric (CM). This entails further lower maximum power reduction (MPR), and hence higher maximum transmission power for coverage enhancement.

The spectral shaping (i.e., FDSS) can be applied with or without spectral extension.

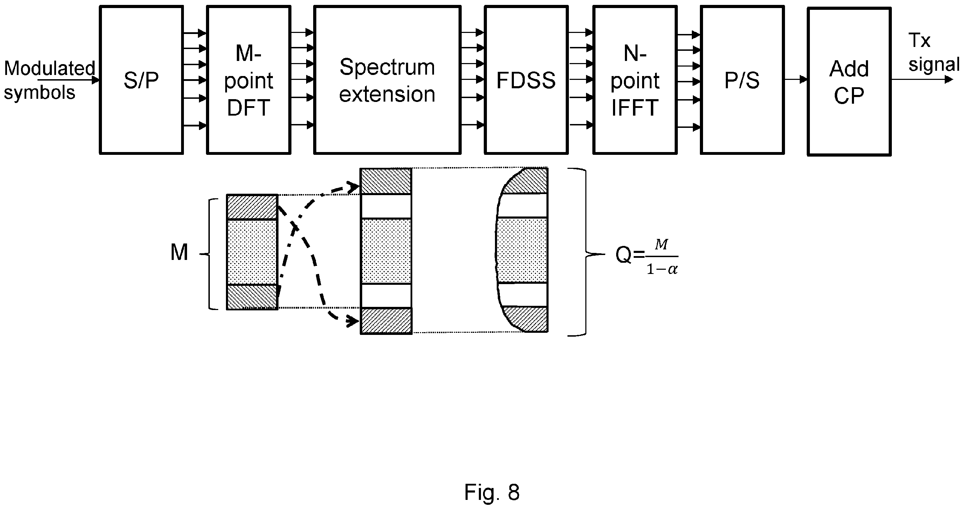

Figure 8 is a schematic block diagram illustrating signal preparation elements according to example embodiments, and in particular illustrates a DFT-s-OFDM transmitter (NR UL transmitter) with FDSS and spectral extension, i.e., a processing chain thereof, including a serial-to-parallel (S/P) block, an M-point DFT block, a spectrum/spectral extension block, an FDSS block, an N-point Inverse Fast Fourier Transform (IFFT) block, a parallel-to-serial (P/S) block, and an add cyclic prefix (CP) block.

In spectral shaping, the transition band bins are weighted by the FDSS function before mapping to the IFFT input. The FDSS with spectrum extension (FDSS-SE) has the additional spectrum/spectral extension block which results in excess-bands. The spectrum/spectral extension applied by the spectrum/spectral extension block may for example be a cyclic extension or a symmetric extension.

In Figure 8, the spectrum extension is depicted with following parameters:

- In-band size: Occupied resource elements (RE) after DFT-block, i.e., M in Figure 8,
- Excess-band size: The amount of REs for spectrum extension, i.e., (Q-M) in Figure 8, and
- Total allocation size (In-band size + Excess-band size): Occupied REs after Spectrum extension block, i.e., Q in Figure 8.

The amount of extension can be expressed by means of Extension factor a:

$$\alpha = (Q - M)/Q$$

(i.e., Excess-band size / Total allocation size)

The spectrum extension provides several advantages.

Firstly, spectrum extension can reduce the PAPR, since the effective pulses have larger time separation.

Secondly, spectrum extension can reduce the inter-symbol interference, which is added when FDSS is introduced.

Thirdly, since the excess-band is also data, it may or may not be used by a gNB receiver. In case it is used, it provides further frequency diversity.

The shaping function without spectrum extension is a tradeoff between demodulation performance and the transmission (Tx) power gain, while shaping with spectrum extension is a tradeoff between spectral efficiency and Tx power gain and demodulation performance.

It is an option to apply FDSS for DFT-s-OFDM without spectrum extension, and to use FDSS only with pi/2-BPSK (BPSK: bipolar phase shift keying) modulation. The gain by applying FDSS to higher order modulation techniques (e.g., quadrature phase shift keying (QPSK)) is lower than the gain when applying FDSS to pi/2-BPSK, however FDSS with spectrum extension provides higher gain with QPSK modulation.

Having an overall aim to improve thoroughly the UL coverage in mind, enhancements for other higher order modulation techniques are desirable to be taken into account.

FDSS with symmetric spectrum extension is one candidate serving as a key enabler for coverage improvement.

Although FDSS-SE provides significant PAPR gains, it is desirable to further increase spectral efficiency of the transmission or coverage/energy efficiency by providing lower coding rate possibility even with same throughput and allocation.

The excess-band in FDSS-SE may be just redundant data copied from in-band to provide some diversity and PAPR gains, and thus it could be not fully or optimally exploited.

Besides, PAPR reduction is achieved also with only partial usage of excess-band, i.e., not necessarily all of the excess-band subcarriers (SC) need to be copied in order to achieve such PAPR reduction.

Thus, with the present specification, it is aimed for increase of spectral and/or energy efficiency (coverage) of FDSS-SE or, on the other hand, enabling alternative usage of excess-band to carry information that could be additional useful data bits (larger transport block size (TBS), throughput (Tput)/spectrum efficiency (SE)) or redundant coding bits with lower coding rate (same TBS, Tput/SE and better energy efficiency (EE)/coverage).

Hence, in brief, according to example embodiments, FDSS-SE is implemented with index modulation (IM), where IM is performed only in the excess-band or other band fragment within allocated bandwidth (BW) (e.g., part of in-band and/or excess-band).

Index modulation conveys additional information bits by changing a communication system's state which is represented by a certain index.

Compared to traditional systems using amplitude, phase or frequencies to convey information, index modulation alters a system state in order to convey additional information bits.

This state is required to be controllable at the transmitter and detectable at the receiver.

IM domains may be, for example

- Activating/targeting transmit/receive antenna(s) ("spatial IM"), where the activated/targeted antenna(s) are indexed to convey additional bits, and
- Activating certain time slot(s) or subcarrier(s) from a group of reserved sets to transmit information ("time IM" and "frequency IM").

In example IM schemes, a data bitstream is divided into two sub-streams.

The first sub-stream is mapped to conventional M-ary amplitude phase modulation (APM) symbols (e.g., quadrature amplitude modulation (QAM), phase shift keying (PSK), pulse amplitude modulation (PAM), amplitude phase shift keying (APSK), polar QAM, etc.), and the second sub-stream is mapped to an index that selects a certain state among a finite set of possibilities.

This indexation allows conveying implicitly more information bits by means of IM through the index of selected communication system's state. The possible states should be detectable at the receiver side to recover the additional information bits conveyed implicitly by the selected state and allow the detection of transmitted APM symbol(s).

According to example embodiments, a terminal (e.g. a user equipment (UE)) sends its capability and/or assistance information related to IM [1].

Further, according to example embodiments, (in response thereto) a network node, in particular an access node (e.g. a base station (BS)), configures the UE with FDSS-SE [2].

This configuration may include a determination of in-band and excess-band subcarriers on both sides of the in-band.

Further, according to example embodiments, the BS configures the UE with IM on (at least part of at least one) excess-band or other band fragment within the allocated BW [3].

This configuration may include also a certain IM pattern.

Further, the decision (to configure) whether to follow normal FDSS-SE operation or IM at a band fragment/portion (e.g. excess-band) may be based e.g. on a signal-to-noise ratio (SNR) or a UE indication.

Further, according to example embodiments, the UE performs bitstream interleaving and the split of (APM) modulation and IM bits according to the gNB indication [4].

Further, according to example embodiments, the UE modulates part of the incoming bits (for example) to APM (e.g. QPSK) symbols, and modulates part of the bits using subcarrier or pattern indices carried in the IM band fragment (e.g., excess-band) [5].

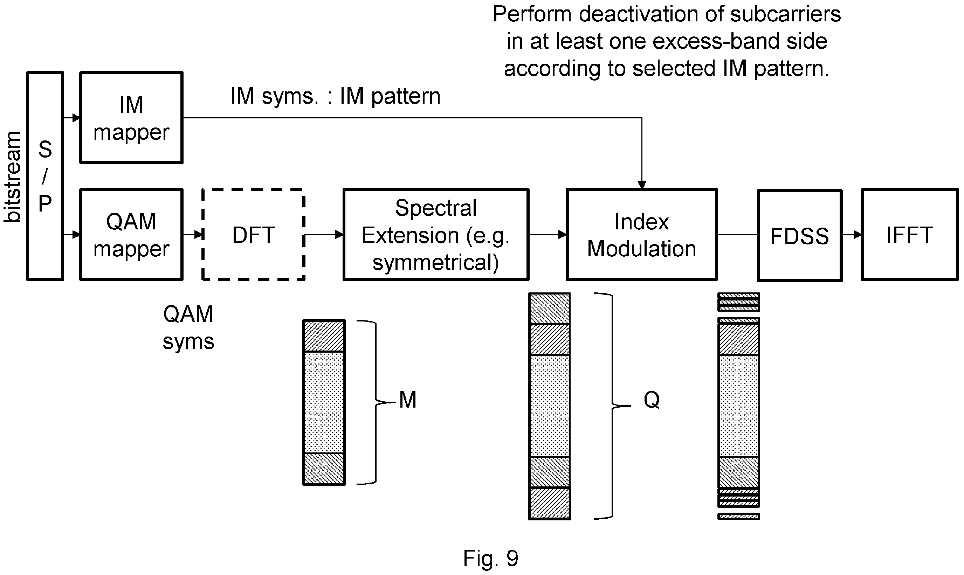

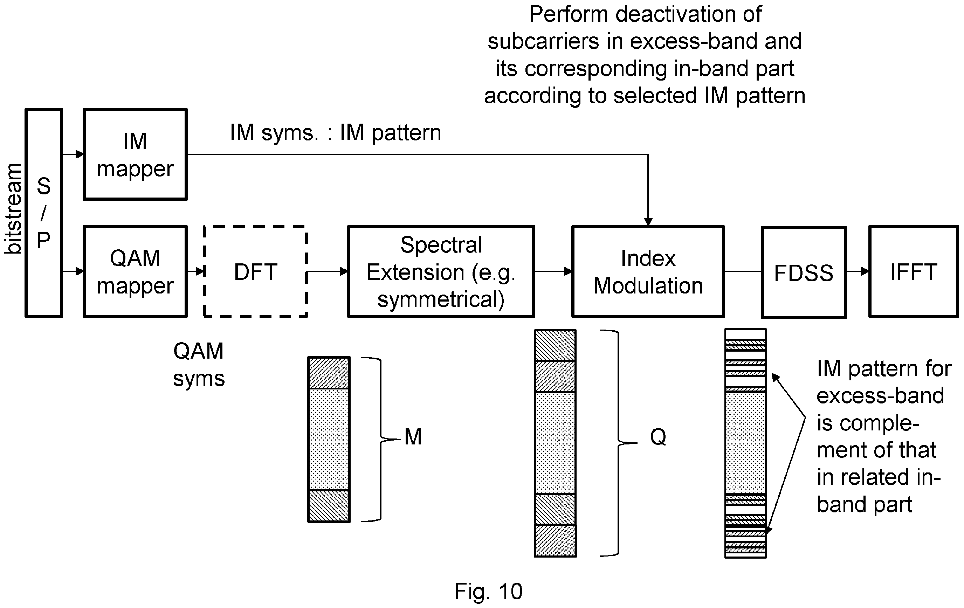

Further, according to example embodiments, the UE may subject the APM symbols to transform precoding (e.g. normal DFT). This may be effected e.g. in case of DFT-s-OFDM. On the other hand, the UE may not subject the APM symbols to such transform precoding. This may be effected e.g. in case of CP-OFDM. Such optionality is indicated e.g. in Figures 9 and 10 by the dashed illustration of the exemplary DFT block. In either way, according to example embodiments, the UE subjects the APM symbols (pre-coded or not) to spectrum extension (e.g. symmetric extension, cyclic extension) [6].

Further, according to example embodiments, the UE modulates IM bits at least in part to one side of the in-band (in excess-band) or other band fragment according to the predetermined/configured IM pattern [7].

Figure 9 is a schematic block diagram illustrating signal preparation elements according to example embodiments, and in particular illustrates IM application to the excess-bands of FDSS-SE.

As is illustrated in Figure 9, for spectrum extension (here, in particular an example implementing symmetrical extension is depicted), side-bands of the in-band are copied (foreseen to be copied) to the excess-bands on the opposite side of the in-band (indicated by different hachure directions, where the same hachure direction indicates the relationship between in-band portions and excess-band portions). Further, as illustrated in Figure 9, IM is applied to the excess-band, where IM can be applied jointly or independently over each band fragment.

The BS may detect the location of zeros (one or more) from the excess-band SCs, and the location of the zeros determines the IM pattern (bit stream) carried by the excess-band, and other SCs of the excess-band are a copy of in-band REs (according to extension).

As another example, dependent on the implementation, the BS may detect a first predetermined complex value (e.g. first amplitude) for first state subcarriers and a second predetermined complex value (e.g. second amplitude) amplitude for second state subcarriers (and determines the location thereof) to determine the IM pattern.

The BS Rx may have an energy-based detector that considers the (Ng-Na) SCs with the lowest energy as inactive SCs, where Na is the number of active SCs within a group of Ng SCs. Alternatively, the log-likelihood ratio (LLR) may be calculated to deduce the active SCs, or a joint detection for IM patterns and APM symbols may be performed.

The detection method of the BS is not limited to those exemplarily mentioned above.

The excess-band SC may be zero, if the modulated bit is zero, and the excess-band SC may be a copy of the in-band RE (according to symmetric and/or cyclic extension), if the modulated bit is 1. Vice versa, dependent on the implementation, the excess-band SC may be zero, if the modulated bit is 1, and the excess-band SC may be a copy of the in-band RE (according to symmetric and/or cyclic extension), if the modulated bit is zero.

The same IM pattern may be used for both excess-bands (excess-bands on both sides of the in-band), which provides improved detection robustness. This corresponds to the result of index modulation illustrated in Figure 9.

As another option, the same IM pattern may be used for both excess-bands (excess-bands on both sides of the in-band), where the IM pattern on the one excess-band is mirror-inverted to the IM pattern on the other excess-band, i.e., the two IM patterns are symmetric, which as well provides improved detection robustness.

The same IM bits may be modulated in both sides (in both excess-bands), but the other side (the other side excess-band) may be e.g. shifted cyclically in relation to one side (in relation to one side excess-band) to provide better robustness (e.g., when FDSS is used, because edges may have high attenuation, by shifting the other side, better average detection may be achieved).

Only a part of the excess-band may be used for IM.

The excess-band SC may be multiplied by a first predetermined complex value (i.e., amplitude and phase shift $A1 \cdot e^{j \cdot theta1}$), if the modulated bit is zero, and the excess-band SC may be multiplied by a second predetermined complex value (i.e., amplitude and phase shift $A2 \cdot e^{j \cdot theta2}$), if modulated bit is 1, where the excess-band SCs are copies of the in-band REs. In such case, the scaling for a set of SCs with at least one predetermined complex value could be used to convey jointly more than one IM bits. The values of the predetermined complex values may be designed to maintain same average power like legacy.

As a concrete example thereof, the excessband SC may be multiplied by an amplitude A1 (e.g. 0.5), if the modulated bit is zero, and the excess-band SC may be multiplied by amplitude A2 (e.g. 1.0), if modulated bit is 1, where the excess-band SCs are copies of the in-band REs. In such case, the amplitude scaling for a set of SCs with at least one amplitude factor could be used to convey jointly more than one IM bits. For example, four SCs scaled according to one the following patterns convey jointly 2 IM bits: [A2 A1 A1 A1], [A1 A2 A1 A1], [A1 A1 A2 A1], [A1 A1 A1 A2]. The values of the amplitude factors may be designed to maintain same average power like legacy.

To the in-band fragment used for the extension (i.e., the in-band REs to be copied), a complement IM pattern compared to its copied version in the excessband may be applied for more robust IM pattern detection. In this case, the same IM pattern may be used for both excess-bands (excess-bands on both sides of the in-band), such that the same complement IM pattern (complement to the IM pattern applied to the excessbands) is applied to the both side in-band fragments used for the extension (i.e., the in-band REs to be copied). As another option, different IM patterns may be used for both excess-bands (excess-bands on both sides of the in-band), such that different complement IM patterns (complement to the respective IM patterns applied to the excess-bands) are applied to the both side in-band fragments used for the extension (i.e., the in-band REs to be copied). In other words, in this another option, the IM pattern applied to one side-band of the in-band is complement to the IM pattern applied to the excess-band which is a copy of the one side-band of the in-band (i.e., the excess-band on the opposite side of the in-band), and the IM pattern applied to the other (opposite) side-band of the in-band is complement to the IM pattern applied to the excess-band which is a copy of the other side-band of the in-band (i.e., the excess-band on the one side of the in-band). This another option is exemplarily illustrated in Figure 10, which is a schematic block diagram illustrating signal preparation elements according to example embodiments.

Applying a complement IM pattern compared to its copied version in the excess-band to the in-band fragment used for the extension (i.e., the in-band REs to be copied) increases the detection robustness and the power boost (less in-band REs lead to larger power boost compared to the same number of inactive REs in excessband) while maintaining the same total power like legacy system without IM.

The advanced Rx for FDSS-SE on the BS side may sum-up excess-band copied data to its in-band related part (e.g., maximal ratio combining (MRC)), and thus, all REs for in-band are fully recovered even if some REs are deactivated (e.g., set to zero or amplitude scaled) for IM purpose.

Further, according to example embodiments, the UE may apply power boosting according to the number of zero-elements in frequency domain [8].

Further, according to example embodiments, the UE possibly applies FDSS to the total allocation [9].

This may not be necessary at least in case there is no coverage limitation.

Further, according to example embodiments, the UE performs waveform processing following conventional (DFT-s-)OFDM processing and transmits the uplink signal (towards the BS) [10].

Further, according to example embodiments, the BS receives and demodulates the IM bits from the corresponding band in frequency domain [11].

The BS may use active detected excess-band SCs for enhanced receiver operation, by summing those to corresponding in-band REs in frequency domain.

Further, according to example embodiments, the BS demodulates APM data from in-band signal in time domain [12].

Example embodiments are specified below in more detail.

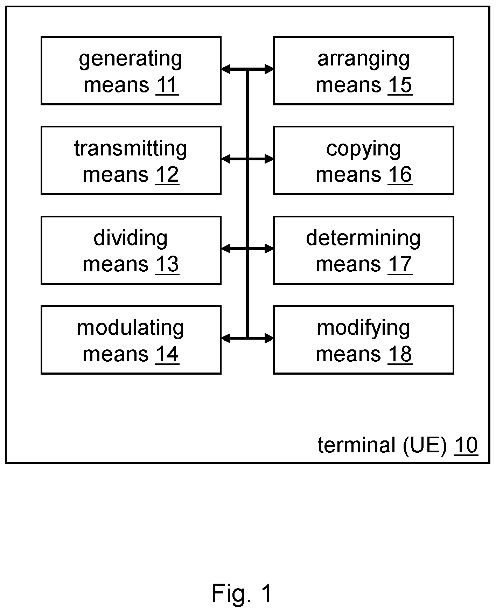

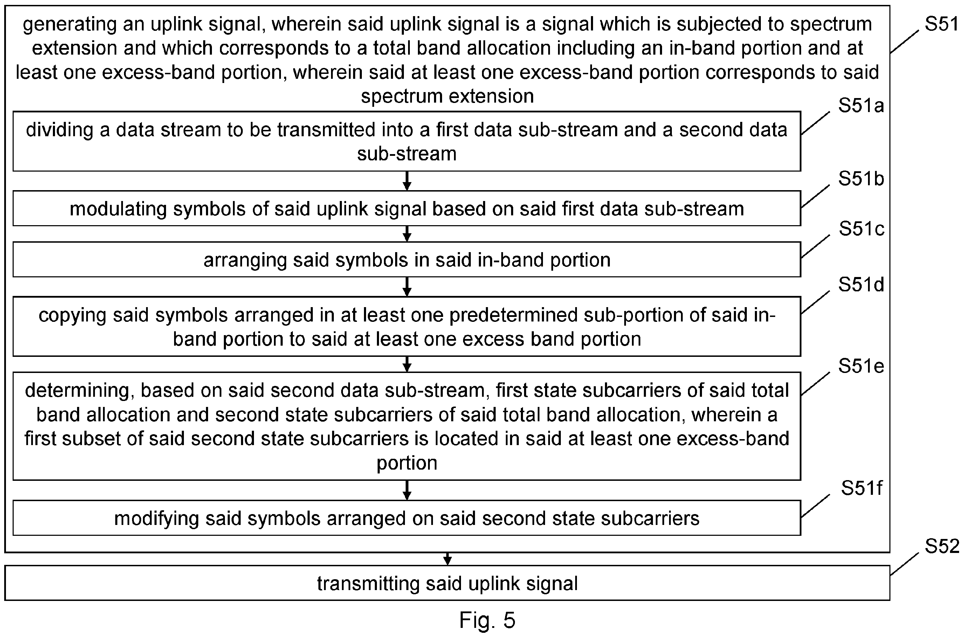

Figure 1 is a block diagram illustrating an apparatus according to example embodiments. The apparatus may be a terminal 10 such as a user equipment (UE) comprising a generating means 11, a transmitting means 12, a dividing means 13, a modulating means 14, an arranging means 15, a copying means 16, a determining means 17, and a modifying means 18. The generating means 11 generates an uplink signal, wherein said uplink signal is a signal which is subjected to spectrum extension and which corresponds to a total band allocation including an in-band portion and at least one excessband portion, wherein said at least one excess-band portion corresponds to said spectrum extension. The transmitting means 12 transmits said uplink signal. The dividing means 13 divides a data stream to be transmitted into a first data sub-stream (e.g. at least a first data substream) and a second data sub-stream (e.g. at least a second data sub-stream). The modulating means 14 modulates symbols of said uplink signal based on said first data sub-stream. The arranging means 15 arranges said symbols in said in-band portion. The copying means 16 copies said symbols arranged in at least one predetermined sub-portion of said in-band portion to said at least one excess-band portion. The determining means 17 determines, based on said second data sub-stream, first state subcarriers of said total band allocation and second state subcarriers of said total band allocation, wherein a first subset of said second state subcarriers is located in said at least one excess-band portion. The modifying means 18 modifies said symbols arranged on said second state subcarriers. Figure 5 is a schematic diagram of a procedure according to example embodiments. The apparatus according to Figure 1 may perform the method of Figure 5 but is not limited to this method. The method of Figure 5 may be performed by the apparatus of Figure 1 but is not limited to being performed by this apparatus.

As shown in Figure 5, a procedure according to example embodiments comprises an operation of generating (S51) an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and an operation of transmitting (S52) said uplink signal. The exemplary generating operation (S51) according to example embodiments comprises an operation of dividing (S51a) a data stream to be transmitted into a first data sub-stream and a second data sub-stream, an operation of modulating (S51b) symbols of said uplink signal based on said first data sub-stream, an operation of arranging (S51c) said symbols in said in-band portion, an operation of copying (S51d) said symbols arranged in at least one predetermined sub-portion of said in-band portion to said at least one excess-band portion, an operation of determining (S51e), based on said second data sub-stream, first state subcarriers of said total band allocation and second state subcarriers of said total band allocation, wherein a first subset of said second state subcarriers is located in said at least one excess-band portion, and an operation of modifying (S51f) said symbols arranged on said second state subcarriers.

With respect to the copying operation (S51d), it is noted that this may be considered as consisting of copying the symbols arranged in the at least one predetermined sub-portion of the in-band portion and arranging the copied symbols in the at least one excess-band portion. The symbols arranged in the at least one predetermined sub-portion of the in-band portion are not affected by the (subsequent) copying (and arranging) operation.

Further, it is noted that the first subset of the second state subcarriers (the first subset located in the at least one excess-band portion) may be a part or all of the second state subcarriers.

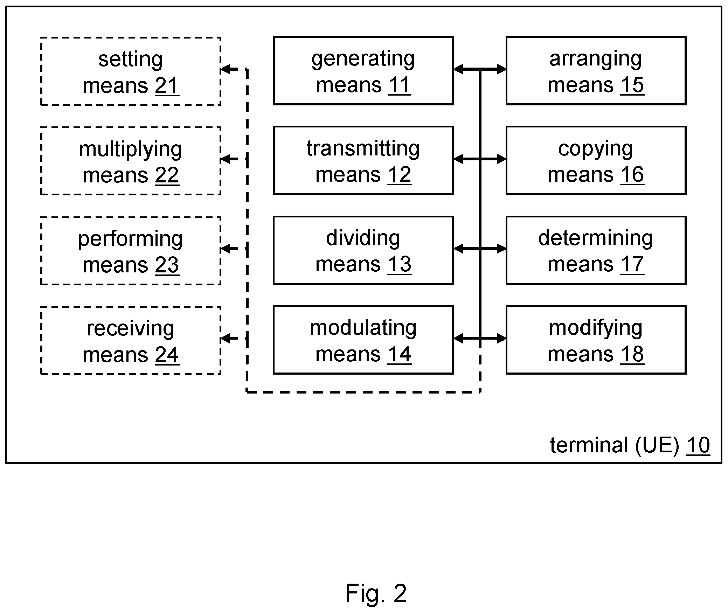

Figure 2 is a block diagram illustrating an apparatus according to example embodiments. In particular, Figure 2 illustrates a variation of the apparatus shown in Figure 1. The apparatus according to Figure 2 may thus further comprise setting means 21, multiplying means 22, performing means 23, and/or receiving means 24.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to further example embodiments, a second subset of said second state subcarriers is located in said at least one predetermined sub-portion of said in-band portion, wherein an arrangement pattern of said first subset of said second state subcarriers located in said at least one excess-band portion complements an arrangement pattern of said second subset of said second state subcarriers located in said at least one predetermined sub-portion of said in-band portion.

According to further example embodiments, said total band allocation includes two excess-band portions, wherein an arrangement pattern of said second state subcarriers located in a first excess-band portion of said two excess-band portions corresponds to an arrangement pattern of said second state subcarriers located in a second excess-band portion of said two excess-band portions.

According to further example embodiments, said total band allocation includes two excess-band portions, wherein an arrangement pattern of said second state subcarriers located in a first excess-band portion of said two excess-band portions is mirror-inverted to (symmetrical to) an arrangement pattern of said second state subcarriers located in a second excess-band portion of said two excess-band portions.

According to further example embodiments, said arrangement pattern of said second state subcarriers located in said second excess-band portion is cyclically shifted with respect to said arrangement pattern of said second state subcarriers located in said first excess-band portion.

According to a variation of the procedure shown in Figure 5, exemplary details of the modifying operation (S51f) are given, which are inherently independent from each other as such. Such exemplary modifying operation (S51f) according to example embodiments may comprise an operation of setting said second state subcarriers to zero.

According to a variation of the procedure shown in Figure 5, exemplary details of the modifying operation (S51f) are given, which are inherently independent from each other as such. Such exemplary modifying operation (S51f) according to example embodiments may comprise an operation of multiplying said second state subcarriers with a second amplitude scaling value smaller than a first amplitude scaling value multiplied with said first state subcarriers.

According to a variation of the procedure shown in Figure 5, exemplary details of the modifying operation (S51f) are given, which are inherently independent from each other as such. Such exemplary modifying operation (S51f) according to example embodiments may comprise an operation of multiplying said second state subcarriers with a second amplitude and phase shift based complex value smaller than a first amplitude and phase shift based complex value multiplied with said first state subcarriers.

According to a variation of the procedure shown in Figure 5, exemplary details of the generating operation (S51) are given, which are inherently independent from each other as such. Such exemplary generating operation (S51) according to example embodiments may comprise an operation of performing bit stream interleaving on said data stream before said dividing said data stream.

According to a variation of the procedure shown in Figure 5, exemplary additional operations are given, which are inherently independent from each other as such. According to such variation, an exemplary method according to example embodiments may comprise an operation of transmitting an indication in relation to index modulation capability, and an operation of receiving a configuration in relation to application of index modulation.

According to further example embodiments, said uplink signal is said signal which is subjected to frequency domain spectrum shaping with spectrum extension.

According to further example embodiments, said uplink signal is a discrete Fourier transform spread orthogonal frequency division multiplexing signal which is subjected to frequency domain spectrum shaping with spectrum extension.

According to further example embodiments, said modulating includes an M-ary amplitude phase modulation.

According to further example embodiments, said symbols are subjected to transform precoding.

In other words, arranging the symbols in the in-band portion (and subsequently in the at least one excess-band portion) may include e.g. Discrete Fourier Transform (DFT) precoding (transform precoding) of the symbols and arranging DFT precoded samples of the symbols.

That is, respective subcarriers may include modulated symbols (e.g. in case of CP-OFDM) or may include modulated symbols subjected to precoding (e.g. in case of DFT-s-OFDM).

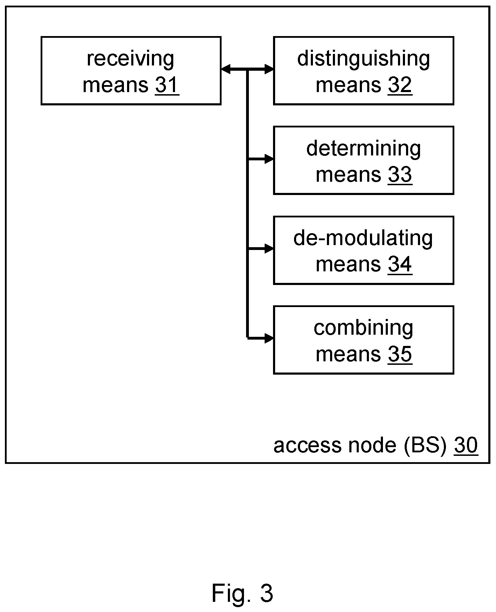

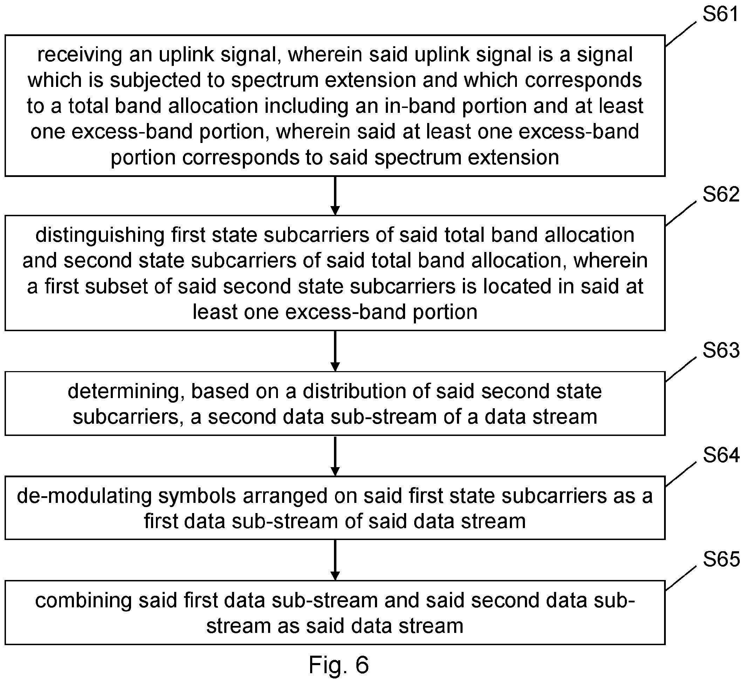

Figure 3 is a block diagram illustrating an apparatus according to example embodiments. The apparatus may be an access node 30 such as a base station (BS) comprising a receiving means 31, a distinguishing means 32, a determining means 33, a de-modulating means 34, and a combining means 35. The receiving means 31 receives an uplink signal, wherein said uplink signal is a signal which is subjected to spectrum extension and which corresponds to a total band allocation including an in-band portion and at least one excess-band portion, wherein said at least one excess-band portion corresponds to said spectrum extension. The distinguishing means 32 distinguishes first state subcarriers of said total band allocation and second state subcarriers of said total band allocation, wherein a first subset of said second state subcarriers is located in said at least one excess-band portion. The determining means 33 determines, based on a distribution of said second state subcarriers, a second data sub-stream of a data stream. The de-modulating means 34 de-modulates symbols arranged on said first state subcarriers as a first data sub-stream of said data stream. The combining means 35 combines said first data sub-stream and said second data sub-stream as said data stream. Figure 6 is a schematic diagram of a procedure according to example embodiments. The apparatus according to Figure 3 may perform the method of Figure 6 but is not limited to this method. The method of Figure 6 may be performed by the apparatus of Figure 3 but is not limited to being performed by this apparatus.

As shown in Figure 5, a procedure according to example embodiments comprises an operation of receiving (S61) an uplink signal, wherein said uplink signal is a signal which is subjected to spectrum extension and which corresponds to a total band allocation including an in-band portion and at least one excess-band portion, wherein said at least one excess-band portion corresponds to said spectrum extension, an operation of distinguishing (S62) first state subcarriers of said total band allocation and second state subcarriers of said total band allocation, wherein a first subset of said second state subcarriers is located in said at least one excess-band portion, an operation of determining (S63), based on a distribution of said second state subcarriers, a second data sub-stream of a data stream, an operation of de-modulating (S64) symbols arranged on said first state subcarriers as a first data sub-stream of said data stream, and an operation of combining (S65) said first data sub-stream and said second data sub-stream as said data stream.

It is noted that the first subset of the second state subcarriers (the first subset located in the at least one excess-band portion) may be a part or all of the second state subcarriers.

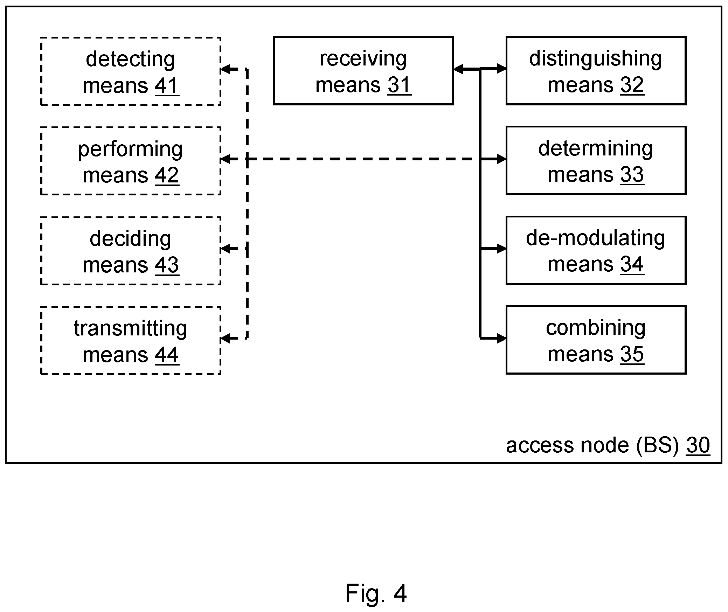

Figure 4 is a block diagram illustrating an apparatus according to example embodiments. In particular, Figure 4 illustrates a variation of the apparatus shown in Figure 3. The apparatus according to Figure 4 may thus further comprise detecting means 41, performing means 42, deciding means 43, and/or transmitting means 44.

In an embodiment at least some of the functionalities of the apparatus shown in Figure 3 (or 4) may be shared between two physically separate devices forming one operational entity. Therefore, the apparatus may be seen to depict the operational entity comprising one or more physically separate devices for executing at least some of the described processes.

According to further example embodiments, a second subset of said second state subcarriers is located in at least one predetermined sub-portion of said in-band portion, wherein an arrangement pattern of said first subset of said second state subcarriers located in said at least one excess-band portion complements an arrangement pattern of said second subset of said second state subcarriers located in said at least one predetermined sub-portion of said in-band portion.

According to further example embodiments, said total band allocation includes two excess-band portions, wherein an arrangement pattern of said second state subcarriers located in a first excess-band portion of said two excess-band portions corresponds to an arrangement pattern of said second state subcarriers located in a second excess-band portion of said two excess-band portions.

According to further example embodiments, said total band allocation includes two excess-band portions, wherein an arrangement pattern of said second state subcarriers located in a first excess-band portion of said two excess-band portions is mirror-inverted to (symmetrical to) an arrangement pattern of said second state subcarriers located in a second excess-band portion of said two excess-band portions.

According to further example embodiments, said arrangement pattern of said second state subcarriers located in said second excess-band portion is cyclically shifted with respect to said arrangement pattern of said second state subcarriers located in said first excess-band portion.

According to a variation of the procedure shown in Figure 6, exemplary details of the distinguishing operation (S62) are given, which are inherently independent from each other as such. Such exemplary distinguishing operation (S62) according to example embodiments may comprise an operation of detecting subcarriers set to zero as said second state subcarriers.

According to a variation of the procedure shown in Figure 6, exemplary details of the distinguishing operation (S62) are given, which are inherently independent from each other as such. Such exemplary distinguishing operation (S62) according to example embodiments may comprise an operation of detecting subcarriers multiplied with a first amplitude scaling value as said first state subcarriers and subcarriers multiplied with a second amplitude scaling value smaller than said first amplitude scaling value as said second state subcarriers.

According to a variation of the procedure shown in Figure 6, exemplary details of the distinguishing operation (S62) are given, which are inherently independent from each other as such. Such exemplary distinguishing operation (S62) according to example embodiments may comprise an operation of detecting subcarriers multiplied with a first amplitude and phase shift based complex value as said first state subcarriers and subcarriers multiplied with a second amplitude and phase shift based complex value smaller than said first amplitude and phase shift based complex value as said second state subcarriers.

According to a variation of the procedure shown in Figure 6, exemplary additional operations are given, which are inherently independent from each other as such. According to such variation, an exemplary method according to example embodiments may comprise an operation of performing bit stream de-interleaving on said data stream.

According to a variation of the procedure shown in Figure 6, exemplary additional operations are given, which are inherently independent from each other as such. According to such variation, an exemplary method according to example embodiments may comprise an operation of receiving an indication in relation to index modulation capability, an operation of deciding a configuration in relation to application of index modulation, and an operation of transmitting said configuration in relation to application of index modulation.

According to further example embodiments, said uplink signal is said signal which is subjected to frequency domain spectrum shaping with spectrum extension.

According to further example embodiments, said uplink signal is a discrete Fourier transform spread orthogonal frequency division multiplexing signal which is subjected to frequency domain spectrum shaping with spectrum extension.

According to further example embodiments, said modulating includes an M-ary amplitude phase modulation.

According to further example embodiments, said symbols are subjected to transform precoding.

In other words, the symbols of said uplink signal may be result of e.g. Discrete Fourier Transform (DFT) precoding (transform precoding) of the symbols and arranging DFT precoded samples of the symbols.

That is, respective subcarriers may include modulated symbols (e.g. in case of CP-OFDM) or may include modulated symbols subjected to precoding (e.g. in case of DFT-s-OFDM).

Example embodiments outlined and specified above are explained below in more specific terms.

As outlined above, according to example embodiments, the UE may send assistance information and/or capability or preferred IM configuration (e.g., IM capability, capability for coding rate adaptation to non-predefined values, etc.). A gNB (i.e., the BS) may then determine an IM configuration according to received indication(s) and its capability/preference. The gNB may then configure the UE accordingly.

According to example embodiments, an interleaver for input bitstream is included at the transmitter (e.g. UE) before bit split to modulation bits and IM bits. In a similar way, according to example embodiments, a deinterleaver may be included at the receiver (e.g. BS) after merge of modulation bits and IM bits.

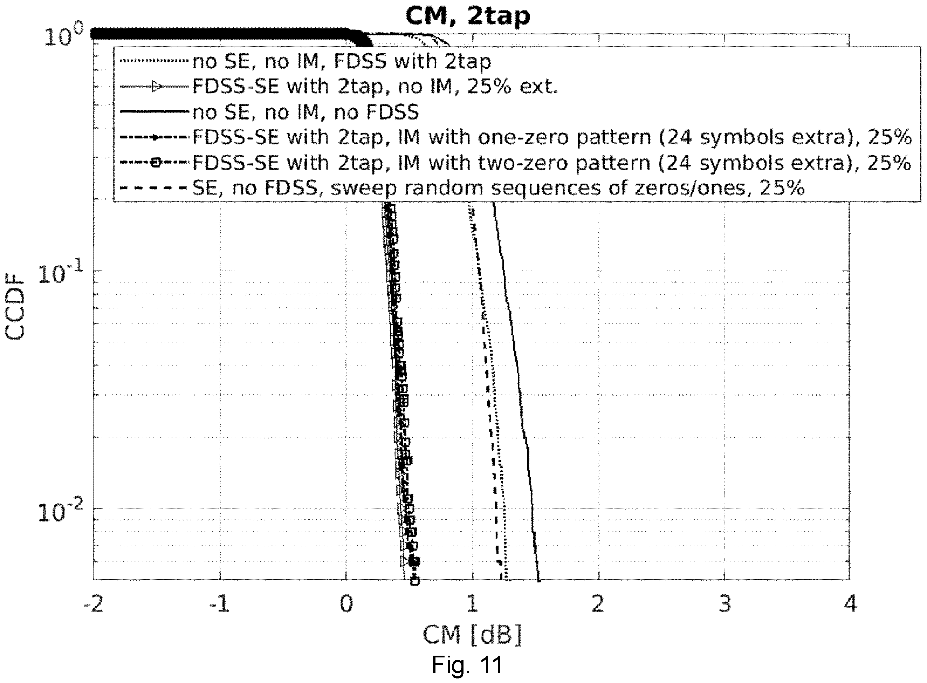

Figure 11 shows a schematic diagram of example complementary cumulative distribution functions for cubic metric (as e.g. defined in 3GPP) under specific signal preparation scenarios according to example embodiments, and in particular illustrates a complementary cumulative distribution function (CCDF) with respect to CM for specific signal forming techniques.

In Figure 11, 'one-zero pattern' means that one zero is swept in the excess-band, and its location defines the carried information stream, and 'two-zero pattern' means that pattern of two zeros is swept.

It is shown that, basically, CM may be the same as with FDSS-SE if e.g., IM carrying bits in the excess band (same info in both sides) is used. It is also observed that IM could provide CM gain over normal DFT-s-OFDM transmission even without any shaping by proper sequence design for the IM. In the example, a total allocation is 16 physical resource blocks (PRB), and with 25% extension, there are 24 SCs excess-band at both sides.

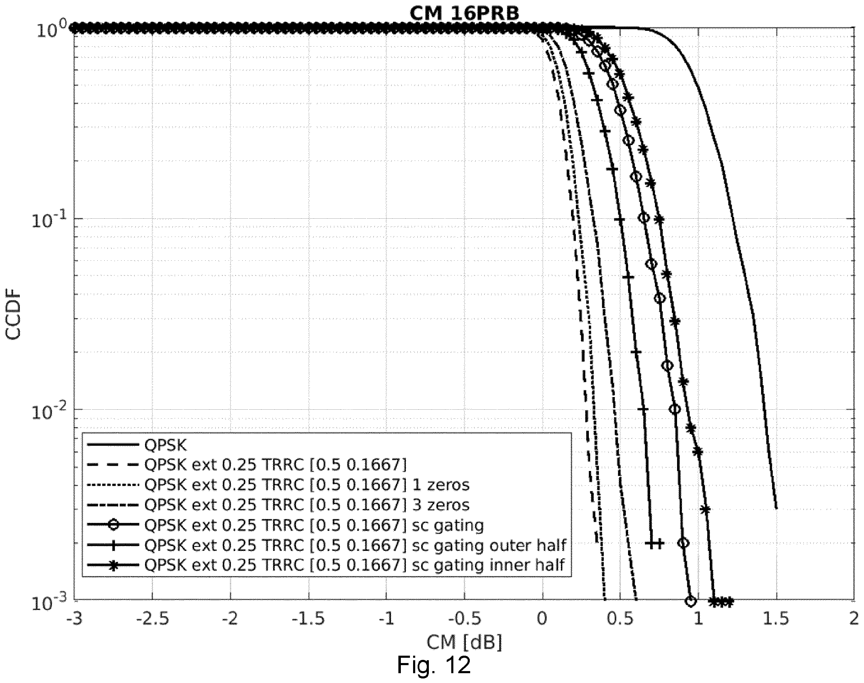

Figure 12 shows a schematic diagram of example complementary cumulative distribution functions for cubic metric (as e.g. defined in 3GPP) under specific signal preparation scenarios according to example embodiments, and in particular illustrates a complementary cumulative distribution function (CCDF) with respect to CM for specific signal forming techniques.

In Figure 12,

- 'x zeros' means there are x zeroed subcarriers in each excess-band,
- 'sc gating' is a method where subcarriers are zeroed if a bit in random data is zero (This is applied for the whole or only in (inner or outer) half of the excess-band; This is the same as the 'sweep random sequences' in Figure 11, except that it has FDSS and that and that it may have a variable number of second state subcarriers (e.g., zero subcarriers) in contrast to a fixed number of zeros in IM patterns shown in Fig. 11),
- all the cases have random data in each excess band, and
- a truncated root raised cosine (RRC) filter is used.

'SC gating' seems to provide surprisingly low CM in these results, which is promising since it can modulate more bits. Especially gating in outer half of the excess-band ("QPSK ext 0.25 TRRC [0.5 0.1667] sc gating outer half") can reach CM which is close to the comparison (FDSS-SE, "QPSK ext 0.25 TRRC [0.5 0.1667]"). It is worth highlighting that the small CM degradation compared to FDSS-SE without IM is negligible and could be not reflected to output back-off (OBO) of power amplifier (PA) while considering all RF requirements. In addition, the power boost gain and the possibility of lower coding rate with IM bits may provide more significant performance gain and thus leads to possibly better net gain.

According to example embodiments, advantageously, it is possible to have same/larger number of bits transmitted in FDSS-SE symbol with same allocation and modulation order.

According to example embodiments, these additional bits are used to

- reduce the coding rate for same TBS (useful data bits) for better coverage (The coding rate could be not a predefined value in modulation and coding scheme (MCS) but it can be deduced from IM configuration according to some rules that may be specified), or to
- increase TBS/Tput even with same MCS, and thus spectral efficiency (Number of physical channel bits used for TBS calculation may be sum of modulation bits and IM bits or may be configurable), or to
- any combination of the above possible use of IM bits for better spectral and/or energy efficiency.

Further, according to example embodiments, advantageously, a smaller number of activated REs (some REs are deactivated with IM) is necessary, leading to a higher power spectral density (PSD) and energy per resource element (EPRE) (i.e. power boosting).

Further, according to example embodiments, advantageously, lowering inter-carrier interference (ICI) in dispersive channels may be enabled thanks to a lower number of active REs (interference sources) than legacy waveforms in (e.g.) 5G-NR.

Further, according to example embodiments, advantageously, reducing adjacent channel leakage ratio (ACLR) and out-of-band radiation (OOB) may be enabled due to deactivating some REs in excess-bands.

Further, according to example embodiments, advantageously, increasing a number of conveyed bits with same time/frequency allocation and modulation as in legacy may be enabled due to additional conveyed bits by IM. These bits could be used to:

- Increase spectral efficiency and throughput,
- Increase energy efficiency or coverage for same throughput by lower coding rate and/or by exploiting some power boost.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

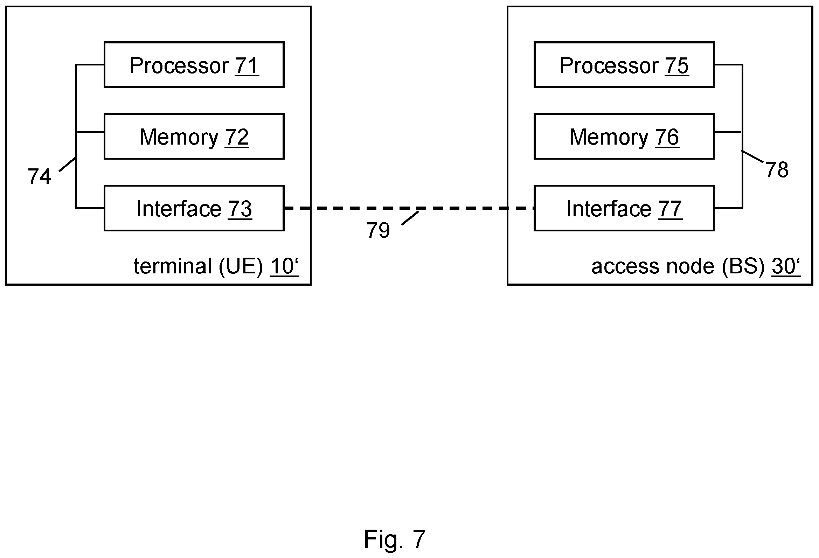

In Figure 7, an alternative illustration of apparatuses according to example embodiments is depicted. As indicated in Figure 7, according to example embodiments, the apparatus (terminal) 10' (corresponding to the terminal 10) comprises a processor 71, a memory 72 and an interface 73, which are connected by a bus 74 or the like. Further, according to example embodiments, the apparatus (access node) 30' (corresponding to the access node 30) comprises a processor 75, a memory 76 and an interface 77, which are connected by a bus 78 or the like, and the apparatuses may be connected via link 79, respectively.

The processor 71/75 and/or the interface 73/77 may also include a modem or the like to facilitate communication over a (hardwire or wireless) link, respectively. The interface 73/77 may include a suitable transceiver coupled to one or more antennas or communication means for (hardwire or wireless) communications with the linked or connected device(s), respectively. The interface 73/77 is generally configured to communicate with at least one other apparatus, i.e. the interface thereof.

The memory 72/76 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the terminal 10 comprises at least one processor 71, at least one memory 72 including computer program code, and at least one interface 73 configured for communication with at least another apparatus. The processor (i.e. the at least one processor 71, with the at least one memory 72 and the computer program code) is configured to perform generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension (thus the apparatus comprising corresponding means or circuitry for generating), to perform transmitting said uplink signal (thus the apparatus comprising corresponding means or circuitry for transmitting), to perform dividing a data stream to be transmitted into a first data sub-stream and a second data sub-stream (thus the apparatus comprising corresponding means or circuitry for dividing), to perform modulating symbols of said uplink signal based on said first data sub-stream (thus the apparatus comprising corresponding means or circuitry for modulating), to perform arranging said symbols in said in-band portion (thus the apparatus comprising corresponding means or circuitry for arranging), to perform copying said symbols arranged in at least one predetermined sub-portion of said in-band portion to said at least one excess-band portion (thus the apparatus comprising corresponding means or circuitry for copying), to perform determining, based on said second data sub-stream, first state subcarriers of said total band allocation and second state subcarriers of said total band allocation, wherein a first subset of said second state subcarriers is located in said at least one excess-band portion (thus the apparatus comprising corresponding means or circuitry for determining), and to perform modifying said symbols arranged on said second state subcarriers (thus the apparatus comprising corresponding means or circuitry for modifying).

According to example embodiments, an apparatus representing the access node 30 comprises at least one processor 75, at least one memory 76 including computer program code, and at least one interface 77 configured for communication with at least another apparatus. The processor (i.e. the at least one processor 75, with the at least one memory 76 and the computer program code) is configured to perform receiving an uplink signal, wherein said uplink signal is a signal which is subjected to spectrum extension and which corresponds to a total band allocation including an in-band portion and at least one excess-band portion, wherein said at least one excess-band portion corresponds to said spectrum extension (thus the apparatus comprising corresponding means or circuitry for receiving), to perform distinguishing first state subcarriers of said total band allocation and second state subcarriers of said total band allocation, wherein a first subset of said second state subcarriers is located in said at least one excess-band portion (thus the apparatus comprising corresponding means or circuitry for distinguishing), to perform determining, based on a distribution of said second state subcarriers, a second data sub-stream of a data stream (thus the apparatus comprising corresponding means or circuitry for determining), to perform de-modulating symbols arranged on said first state subcarriers as a first data sub-stream of said data stream (thus the apparatus comprising corresponding means or circuitry for de-modulating), and to perform combining said first data sub-stream and said second data sub-stream as said data stream (thus the apparatus comprising corresponding means or circuitry for combining).

For further details regarding the operability/functionality of the individual apparatuses, reference is made to the above description in connection with any one of Figures 1 to 6 and 8 to 12, respectively.

For the purpose of the present disclosure as described herein above, it should be noted that

-    method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
-    generally, any method step is suitable to be implemented as software or by hardware without changing the idea of the embodiments and its modification in terms of the functionality implemented;
-    method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
-    devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
-    an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
-    a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

The present disclosure also covers any conceivable combination of method steps and operations described above, and any conceivable combination of nodes, apparatuses, modules or elements described above, as long as the above-described concepts of methodology and structural arrangement are applicable.

In view of the above, there are provided measures for efficient exploitation of spectrum extension resources. Such measures exemplarily comprise generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and transmitting said uplink signal, and in relation to said generating, such measures exemplarily comprise dividing a data stream to be transmitted into a first data sub-stream and a second data sub-stream, modulating symbols of said uplink signal based on said first data sub-stream, arranging said symbols in said in-band portion, copying said symbols arranged in at least one predetermined sub-portion of said in-band portion to said at least one excess-band portion, determining, based on said second data sub-stream, first state subcarriers of said total band allocation and second state subcarriers of said total band allocation, wherein a first subset of said second state subcarriers is located in said at least one excess-band portion, and modifying said symbols arranged on said second state subcarriers.

Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the inventive idea as disclosed herein.

List of acronyms and abbreviations

| 3GPP | 3rd Generation Partnership Project |
| 5G | 5th Generation |
| 6G | 6th Generation |
| ACLR | adjacent channel leakage ratio |
| APM | amplitude phase modulation |
| APSK | amplitude phase shift keying |
| BLER | block error rate |
| BPSK | bipolar phase shift keying |
| BS | base station |
| BW | bandwidth |
| CBW | carrier bandwidth |
| CCDF | complementary cumulative distribution function |
| CM | cubic metric |
| CP | cyclic prefix |
| CP-OFDM | CP orthogonal frequency division multiplexing |
| DCI | downlink control information |
| DFT | Discrete Fourier Transform |
| DFT-s-OFDM | DFT spread orthogonal frequency division multiplexing |
| DL | downlink |
| EE | energy efficiency |
| EPRE | energy per resource element |
| FDRA | frequency domain resource allocation |
| FDSS | frequency domain spectrum shaping |
| FDSS-SE | FDSS with spectrum extension |
| FFT | Fast Fourier Transform |
| ICI | inter-carrier interference |
| IDFT | Inverse DFT |

| IFFT | Inverse FFT |
| IM | index modulation |
| LLR | log-likelihood ratio |
| MCS | modulation and coding scheme |
| MPR | maximum power reduction |
| MRC | maximal ratio combining |
| NR | New Radio |
| OBO | output back-off |
| OFDM | orthogonal frequency division multiplexing |
| OOB | out-of-band radiation |
| PA | power amplifier |
| PAM | pulse amplitude modulation |
| PAPR | peak-to-average power ratio |
| PRB | physical resource block |
| PSD | power spectral density |
| PSK | phase shift keying |
| PUCCH | Physical Uplink Control Channel |
| PUSCH | Physical Uplink Shared Channel |
| P/S | Parallel to serial |
| QAM | quadrature amplitude modulation |
| QPSK | quadrature phase shift keying |
| RRC | root raised cosine |
| RE | resource element |
| RF | radio frequency |
| SC | subcarrier |
| SE | spectrum efficiency |
| SNIR | signal-to-noise-plus-interference ratio |
| SNR | signal-to-noise ratio |
| S/P | Serial to parallel |
| TBS | transport block size |
| Tput | throughput |
| Tx | transmission |
| UE | user equipment |
| UL | uplink |

**Claims**

1. A method comprising

   generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and
   transmitting said uplink signal, wherein
   in relation to said generating, the method comprises

      dividing a data stream to be transmitted into a first data sub-stream and a second data sub-stream,
      modulating symbols of said uplink signal based on said first data sub-stream,
      arranging said symbols in said in-band portion,

copying said symbols arranged in at least one predetermined sub-portion of said in-band portion to said at least one excess-band portion,

determining, based on said second data sub-stream, first state subcarriers of said total band allocation and second state subcarriers of said total band allocation, wherein a first subset of said second state subcarriers is located in said at least one excess-band portion, and

modifying said symbols arranged on said second state subcarriers.

2. The method according to claim 1, wherein a second subset of said second state subcarriers is located in said at least one predetermined sub-portion of said in-band portion, wherein an arrangement pattern of said first subset of said second state subcarriers located in said at least one excess-band portion complements an arrangement pattern of said second subset of said second state subcarriers located in said at least one predetermined sub-portion of said in-band portion.

3. The method according to claim 1 or 2, wherein

said total band allocation includes two excess-band portions, wherein

an arrangement pattern of said second state subcarriers located in a first excess-band portion of said two excess-band portions corresponds to an arrangement pattern of said second state subcarriers located in a second excess-band portion of said two excess-band portions, or

an arrangement pattern of said second state subcarriers located in a first excess-band portion of said two excess-band portions is mirror-inverted to an arrangement pattern of said second state subcarriers located in a second excess-band portion of said two excess-band portions.

4. The method according to claim 3, wherein said arrangement pattern of said second state subcarriers located in said second excess-band portion is cyclically shifted with respect to said arrangement pattern of said second state subcarriers located in said first excess-band portion.

5. The method according to any of claims 1 to 4, wherein

in relation to said modifying, the method further comprises

setting said second state subcarriers to zero, or

multiplying said second state subcarriers with a second amplitude scaling value smaller than a first amplitude scaling value multiplied with said first state subcarriers, or

multiplying said second state subcarriers with a second amplitude and phase shift based complex value smaller than a first amplitude and phase shift based complex value multiplied with said first state subcarriers, and/or wherein

in relation to said generating, the method further comprises

performing bit stream interleaving on said data stream before said dividing said data stream.

6. The method according to any of claims 1 to 5, further comprising

transmitting an indication in relation to index modulation capability, and

receiving a configuration in relation to application of index modulation.

7. A method comprising

receiving an uplink signal, wherein said uplink signal is a signal which is subjected to spectrum extension and which corresponds to a total band allocation including an in-band portion and at least one excess-band portion, wherein said at least one excess-band portion corresponds to said spectrum extension,

distinguishing first state subcarriers of said total band allocation and second state subcarriers of said total band allocation, wherein a first subset of said second state subcarriers is located in said at least one excess-band portion,

determining, based on a distribution of said second state subcarriers, a second data sub-stream of a data stream,

de-modulating symbols arranged on said first state subcarriers as a first data sub-stream of said data stream, and

combining said first data sub-stream and said second data sub-stream as said data stream.

8. The method according to claim 7, wherein a second subset of said second state subcarriers is located in at least one predetermined sub-portion of said in-band portion, wherein an arrangement pattern of said first subset of said second state subcarriers located in said at least one excess-band portion complements an arrangement pattern of said second subset of said second state subcarriers located in said at least one predetermined sub-portion of said in-band portion.

9. The method according to claim 7 or 8, wherein

said total band allocation includes two excess-band portions, wherein
an arrangement pattern of said second state subcarriers located in a first excess-band portion of said two excess-band portions corresponds to an arrangement pattern of said second state subcarriers located in a second excess-band portion of said two excess-band portions, or
an arrangement pattern of said second state subcarriers located in a first excess-band portion of said two excess-band portions is mirror-inverted to an arrangement pattern of said second state subcarriers located in a second excess-band portion of said two excess-band portions.

10. The method according to claim 9, wherein said arrangement pattern of said second state subcarriers located in said second excess-band portion is cyclically shifted with respect to said arrangement pattern of said second state subcarriers located in said first excess-band portion.

11. The method according to any of claims 7 to 10, wherein

in relation to said distinguishing, the method further comprises

detecting subcarriers set to zero as said second state subcarriers, or
detecting subcarriers multiplied with a first amplitude scaling value as said first state subcarriers and subcarriers multiplied with a second amplitude scaling value smaller than said first amplitude scaling value as said second state subcarriers, or
detecting subcarriers multiplied with a first amplitude and phase shift based complex value as said first state subcarriers and subcarriers multiplied with a second amplitude and phase shift based complex value smaller than said first amplitude and phase shift based complex value as said second state subcarriers, and/or wherein

the method further comprises
performing bit stream de-interleaving on said data stream.

12. The method according to any of claims 7 to 11, further comprising

receiving an indication in relation to index modulation capability,

deciding a configuration in relation to application of index modulation, and
transmitting said configuration in relation to application of index modulation.

13. The method according to any of claims 1 to 12, wherein

said uplink signal is said signal which is subjected to frequency domain spectrum shaping with spectrum extension, and/or
said uplink signal is a discrete Fourier transform spread orthogonal frequency division multiplexing signal which is subjected to frequency domain spectrum shaping with spectrum extension, and/or
said modulating includes an M-ary amplitude phase modulation, and/or
said symbols are subjected to transform precoding.

14. An apparatus comprising

generating means configured to generate an uplink signal, wherein said uplink signal is a signal which is subjected to spectrum extension and which corresponds to a total band allocation including an in-band portion and at least one excess-band portion, wherein said at least one excess-band portion corresponds to said spectrum extension, and
transmitting means configured to transmit said uplink signal,
said generating means including

dividing means configured to divide a data stream to be transmitted into a first data sub-stream and a second data sub-stream,
modulating means configured to modulate symbols of said uplink signal based on said first data sub-stream,
arranging means configured to arrange said symbols in said in-band portion, and
copying means configured to copy said symbols arranged in at least one predetermined sub-portion of said in-band portion to said at least one excess-band portion,
determining means configured to determine, based on said second data sub-stream, first state subcarriers of said total band allocation and second state subcarriers of said total band allocation, wherein a first subset of said second state subcarriers is located in said at least one excess-band portion, and
modifying means configured to modify said symbols arranged on said second state subcarriers.

**15.** An apparatus comprising

receiving means configured to receive an uplink signal, wherein said uplink signal is a signal which is subjected to spectrum extension and which corresponds to a total band allocation including an in-band portion and at least one excess-band portion, wherein said at least one excess-band portion corresponds to said spectrum extension,

distinguishing means configured to distinguish first state subcarriers of said total band allocation and second state subcarriers of said total band allocation, wherein a first subset of said second state subcarriers is located in said at least one excess-band portion,

determining means configured to determine, based on a distribution of said second state subcarriers, a second data sub-stream of a data stream,

de-modulating means configured to de-modulate symbols arranged on said first state subcarriers as a first data sub-stream of said data stream, and

combining means configured to combine said first data sub-stream and said second data sub-stream as said data stream.

Fig. 1

terminal (UE) 10

arranging means 15

copying means 16

determining means 17

modifying means 18

generating means 11

transmitting means 12

dividing means 13

modulating means 14

setting means 21

multiplying means 22

performing means 23

receiving means 24

Fig. 2

access node (BS) 30

receiving means 31

distinguishing means 32

determining means 33

de-modulating means 34

combining means 35

Fig. 3

Fig. 4

access node (BS) 30

- distinguishing means 32
- determining means 33
- de-modulating means 34
- combining means 35
- receiving means 31
- detecting means 41
- performing means 42
- deciding means 43
- transmitting means 44

generating an uplink signal, wherein said uplink signal is a signal which is subjected to spectrum extension and which corresponds to a total band allocation including an in-band portion and at least one excess-band portion, wherein said at least one excess-band portion corresponds to said spectrum extension — S51

dividing a data stream to be transmitted into a first data sub-stream and a second data sub-stream — S51a

↓

modulating symbols of said uplink signal based on said first data sub-stream — S51b

↓

arranging said symbols in said in-band portion — S51c

↓

copying said symbols arranged in at least one predetermined sub-portion of said in-band portion to said at least one excess band portion — S51d

↓

determining, based on said second data sub-stream, first state subcarriers of said total band allocation and second state subcarriers of said total band allocation, wherein a first subset of said second state subcarriers is located in said at least one excess-band portion — S51e

↓

modifying said symbols arranged on said second state subcarriers — S51f

↓

transmitting said uplink signal — S52

Fig. 5

EP 4 489 339 A1

```
                                                    ┌─ S61
┌──────────────────────────────────────────────────┐
│ receiving an uplink signal, wherein said uplink   │
│ signal is a signal which is subjected to spectrum │
│ extension and which corresponds to a total band   │
│ allocation including an in-band portion and at    │
│ least one excess-band portion, wherein said at    │
│ least one excess-band portion corresponds to said │
│ spectrum extension                                │
└──────────────────────────────────────────────────┘
                          │
                          ▼                        ┌─ S62
┌──────────────────────────────────────────────────┐
│ distinguishing first state subcarriers of said    │
│ total band allocation and second state subcarriers│
│ of said total band allocation, wherein a first    │
│ subset of said second state subcarriers is located│
│ in said at least one excess-band portion          │
└──────────────────────────────────────────────────┘
                          │
                          ▼                        ┌─ S63
┌──────────────────────────────────────────────────┐
│ determining, based on a distribution of said      │
│ second state subcarriers, a second data sub-stream│
│ of a data stream                                  │
└──────────────────────────────────────────────────┘
                          │
                          ▼                        ┌─ S64
┌──────────────────────────────────────────────────┐
│ de-modulating symbols arranged on said first state│
│ subcarriers as a first data sub-stream of said    │
│ data stream                                       │
└──────────────────────────────────────────────────┘
                          │
                          ▼                        ┌─ S65
┌──────────────────────────────────────────────────┐
│ combining said first data sub-stream and said     │
│ second data sub-stream as said data stream        │
└──────────────────────────────────────────────────┘
```

Fig. 6

Fig. 7

EP 4 489 339 A1

Modulated symbols → S/P → M-point DFT → Spectrum extension → FDSS → N-point IFFT → P/S → Add CP → Tx signal

M

$Q = \dfrac{M}{1-\alpha}$

EP 4 489 339 A1

Fig. 8

Perform deactivation of subcarriers
in at least one excess-band side
according to selected IM pattern.

bitstream

S / P

IM mapper

IM syms. : IM pattern

QAM mapper

DFT

Spectral Extension (e.g. symmetrical)

Index Modulation

FDSS

IFFT

QAM syms

M

Q

Fig. 9

Perform deactivation of
subcarriers in excess-band and
its corresponding in-band part
according to selected IM pattern

IM syms. : IM pattern

bitstream

| S / P | IM mapper |
| QAM mapper | DFT | Spectral Extension (e.g. symmetrical) | Index Modulation | FDSS | IFFT |

QAM syms

M

Q

IM pattern for excess-band is comple-ment of that in related in-band part

Fig. 10

EP 4 489 339 A1

**CM, 2tap**

Legend:
- no SE, no IM, FDSS with 2tap
- FDSS-SE with 2tap, no IM, 25% ext.
- no SE, no IM, no FDSS
- FDSS-SE with 2tap, IM with one-zero pattern (24 symbols extra), 25%
- FDSS-SE with 2tap, IM with two-zero pattern (24 symbols extra), 25%
- SE, no FDSS, sweep random sequences of zeros/ones, 25%

CCDF (y-axis): $10^0$, $10^{-1}$, $10^{-2}$

CM [dB] (x-axis): -2, -1, 0, 1, 2, 3, 4

Fig. 11

EP 4 489 339 A1

Fig. 12

Europäisches
Patentamt

European
Patent Office

Office européen
des brevets

# EUROPEAN SEARCH REPORT

Application Number

**EP 23 18 3956**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/199793 A1 (NOKIA TECHNOLOGIES OY [FI]) 29 September 2022 (2022-09-29) <br> * figures 4-7 * <br> * page 21, line 3 – page 25, line 28 * <br> ----- | 1-15 | INV. <br> H04L5/00 <br> H04L27/26 |
| A | WO 2022/152368 A1 (NOKIA TECHNOLOGIES OY [FI]) 21 July 2022 (2022-07-21) <br> * figures 2,6 * <br> ----- | 1-15 | |

**TECHNICAL FIELDS SEARCHED (IPC)**

**H04L**

The present search report has been drawn up for all claims

| Place of search | Date of completion of the search | Examiner |
|---|---|---|
| Berlin | 8 December 2023 | Feng, Mei |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 18 3956

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2023

| Patent document cited in search report | Publication date | Patent family member(s) | Publication date |
|---|---|---|---|
| WO 2022199793 A1 | 29-09-2022 | NONE | |
| WO 2022152368 A1 | 21-07-2022 | EP 4278573 A1<br>WO 2022152368 A1 | 22-11-2023<br>21-07-2022 |

EPO FORM P0459

For more details about this annex : see Official Journal of the European Patent Office, No. 12/82